# EUROPEAN PATENT APPLICATION

(11) **EP 4 786 295 A1**
(43) Date of publication of application: **05.08.2026**
(21) Application number: 23953403.5
(22) Date of filing: 26.09.2023
(51) Int. Cl.: B60W 30/18, B60W 40/06, B60W 40/076, B60W 40/105, B60W 60/00

(54) **VEHICLE CONTROL METHOD AND CONTROL SYSTEM, AND VEHICLE**

(71) Applicant: Yinwang Intelligent Technologies Co., Ltd., Shenzhen, Guangdong 518110 (CN)
(72) Inventor: XU, Yan, Shenzhen, Guangdong 518129 (CN); LIU, Hanwen, Shenzhen, Guangdong 518129 (CN); GUO, Zhenhua, Shenzhen, Guangdong 518129 (CN)
(74) Representative: Maiwald GmbH
(86) International application number: PCT/CN2023/121561
(87) International publication number: WO 2025/065243

(57) **Abstract**

A vehicle control method, a control system, and a vehicle are disclosed. The vehicle control method includes: collecting road information by using a sensor of a vehicle, where the road information includes information about a slope road section in a to-be-traveled road section; determining, based on the road information, whether the vehicle travels on the slope road section; and when the vehicle travels on the slope road section, driving the vehicle based on first torque to travel, where the first torque is used to maintain that a conversion amount between mechanical energy of the vehicle and vehicle energy supply is less than or equal to an energy threshold, so as to achieve a goal of controlling energy conversion between kinetic energy and gravitational potential energy of the vehicle on the slope road section, to reduce an energy conversion loss caused by the vehicle to resist or regenerate the gravitational potential energy, thereby reducing energy consumption and enhancing economical efficiency for the vehicle.

## Description

### TECHNICAL FIELD

This application relates to the field of vehicle technologies, and in particular, to a vehicle control method, a control system, and a vehicle.

### BACKGROUND

In an intelligent driving scenario, for example, in an autonomous driving scenario, based on an intelligent driving control algorithm, even if a vehicle travels on a slope road section, a vehicle control unit controls the vehicle to keep traveling at a uniform speed. In this case, energy consumption of the vehicle is relatively high. Therefore, how to control the vehicle on the slope road section to reduce energy consumption of the vehicle is a problem to be urgently resolved currently.

### SUMMARY

Embodiments of this application provide a vehicle control method, a control system, and a vehicle, to reduce energy consumption and improve economical efficiency for the vehicle traveling on a slope road section.

According to a first aspect, an embodiment of this application provides a vehicle control method. The method may be performed by a control apparatus. The control apparatus may be implemented as an electronic device or a component in the electronic device, for example, a chip, a chip system, or another functional module that can invoke a program and execute the program. The electronic device may be implemented as a vehicle, a vehicle control unit in the vehicle, or the like.

The method includes: The control apparatus collects road information by using a sensor of a vehicle, where the road information includes information about a slope road section in a to-be-traveled road section, determines, based on the road information, whether the vehicle travels on the slope road section, and when the vehicle travels on the slope road section, drives the vehicle based on first torque to travel, where the first torque is used to maintain that a conversion amount between mechanical energy of the vehicle and vehicle energy supply (that is, energy provided by a powertrain system of the vehicle) is less than or equal to an energy threshold, so as to achieve a goal of controlling existence of energy conversion between kinetic energy and gravitational potential energy of the vehicle on the slope road section, to reduce energy provided by the vehicle to resist or regenerate a change of the gravitational potential energy, thereby reducing energy consumption and enhancing economical efficiency for the vehicle.

Further, the vehicle determines, based on the road information collected by the sensor, whether the vehicle travels on the slope road section. Compared with a manner of determining, by the vehicle based on map data, whether the vehicle travels on the slope road section, in this manner of determining, based on road pre-targeting, whether the vehicle travels on the slope road section, a problem that online map data cannot be obtained in a timely manner when a network is unstable, and vehicle control accuracy is reduced can be avoided, and a problem that network load overheads caused by downloading the map data affect communication quality of the vehicle can be avoided.

In some embodiments, to improve vehicle control accuracy, the control apparatus may determine, based on the road information collected by the sensor and traveling information of the vehicle, whether the vehicle travels on the slope road section. The traveling information may include current acceleration of the vehicle and current torque for driving the vehicle to travel. For example, the control apparatus may determine, based on the current acceleration of the vehicle and the current torque for driving the vehicle to travel, a slope of a road section on which the vehicle is traveling. Further, the control apparatus may determine, based on the road information collected by the sensor and the slope of the road section on which the vehicle is traveling, whether the vehicle travels on the slope road section.

In an example, the energy threshold may reflect an allowed error range when mechanical energy is maintained stable. In this case, the first torque may be used to resist first resistance exerted to the vehicle when the vehicle travels at a current vehicle speed, and the first resistance affects stability of the mechanical energy of the vehicle. Optionally, the first resistance includes wind resistance and/or rolling resistance when the vehicle travels at the current vehicle speed.

In another example, in addition to the first resistance, the first torque is further used to resist a part of resistance caused by gravitational potential energy when the vehicle travels on the slope road section. It should be noted that the part of resistance generated by the gravitational potential energy and resisted by the first torque is less than resistance generated by the gravitational potential energy when the vehicle is controlled to travel at a uniform speed on the slope road section. In other words, in a process in which the control apparatus controls the vehicle based on the first torque to travel, energy conversion still exists between the kinetic energy and the gravitational potential energy of the vehicle.

The foregoing two examples may be applicable to different scenarios. For example, in the first example, energy consumption of the vehicle can be better reduced, and in the second example, a traveling speed of the vehicle can be better controlled.

In some embodiments, to avoid that a vehicle speed of the vehicle on the slope road section is excessively small, which affects traveling efficiency, or the vehicle speed of the vehicle is excessively large, which affects traveling safety, the control apparatus needs to restrict the vehicle speed of the vehicle based on a vehicle speed threshold, for example, control, by adjusting drive torque, the vehicle speed to keep within a range restricted by the vehicle speed threshold. The vehicle speed threshold may include a first threshold that restricts a lower vehicle speed limit and/or a second threshold that restricts an upper vehicle speed limit.

For example, when the vehicle travels on an uphill road section, the control apparatus determines whether the vehicle speed of the vehicle is less than or equal to the first threshold. If the vehicle speed of the vehicle is less than or equal to the first threshold, the control apparatus may control the vehicle to travel at a uniform speed based on the current vehicle speed to an end of the uphill road section, to avoid impact of an excessively low vehicle speed on traveling efficiency.

For example, when the vehicle travels on a downhill road section, the control apparatus determines whether the vehicle speed of the vehicle is greater than or equal to the second threshold. If the vehicle speed of the vehicle is greater than or equal to the second threshold, the control apparatus may control the vehicle to travel at a uniform speed based on the current vehicle speed to an end of the downhill road section, so as to avoid a danger caused by an excessively high vehicle speed to traveling safety.

For example, the control apparatus may determine the first threshold based on length information of the uphill road section, slope information of the uphill road section, and energy conversion efficiency of a drive apparatus of the vehicle, so that the first threshold can accurately match a vehicle speed lower limit of the current uphill road section, to avoid impact of an excessively low vehicle speed on traveling efficiency.

For example, the control apparatus may determine the second threshold based on length information of the downhill road section, slope information of the downhill road section, and the energy conversion efficiency of the drive apparatus of the vehicle, so that the second threshold can accurately match a vehicle speed upper limit of the current downhill road section, thereby avoiding impact of a relatively high vehicle speed on traveling safety.

In some embodiments, to ensure that the control apparatus can control, based on the first torque, the vehicle to travel at a safe and efficient vehicle speed on the slope road section, the control apparatus may determine a first vehicle speed of the vehicle based on the information about the slope road section, for example, length information of the slope road section and/or slope information of the slope road section, and the vehicle may start to travel on the slope road section based on the first vehicle speed.

Further, the control apparatus controls, based on location information of the slope road section, the vehicle to travel to the slope road section based on the first vehicle speed. The location information is collected by the vehicle by using the sensor, so that vehicle control is performed based on road pre-targeting. Compared with a manner of determining, by the vehicle based on map data, whether the vehicle travels on the slope road section, a problem that online map data cannot be obtained in a timely manner when a network is unstable, and vehicle control accuracy is reduced can be avoided, and a problem that network load overheads caused by downloading the map data affect communication quality of the vehicle can be avoided.

Optionally, the information about the slope road section includes at least one of the location information, the length information, and the slope information of the slope road section.

In some embodiments, the control apparatus may determine, based on the road information and/or the traveling information of the vehicle, whether the vehicle completes traveling on the slope road section. When the vehicle completes traveling on the slope road section, the control apparatus may determine drive torque of the vehicle based on any intelligent driving control algorithm. For example, the control apparatus may drive the vehicle to travel based on a control algorithm before traveling on the slope road section. In an example, the control apparatus may control the vehicle to travel at a uniform speed based on the current vehicle speed or a preset vehicle speed, so as to automatically switch a driving mode on different road sections.

According to a second aspect, an embodiment of this application provides a control apparatus, including: an obtaining module, configured to collect road information by using a sensor of a vehicle, where the road information includes information about a slope road section in a to-be-traveled road section; a processing module, configured to determine, based on the road information, whether the vehicle travels on the slope road section; and a control module, configured to: when the vehicle travels on the slope road section, drive the vehicle based on first torque to travel, where the first torque is used to maintain that a conversion amount between mechanical energy of the vehicle and vehicle energy supply is less than or equal to an energy threshold, energy conversion exists between kinetic energy and gravitational potential energy of the vehicle on the slope road section, and the vehicle energy supply is energy provided by a powertrain system of the vehicle.

In some embodiments, the processing module is further configured to: determine, based on traveling information of the vehicle, a slope of a road section on which the vehicle is traveling, where the traveling information includes current acceleration of the vehicle and current torque for driving the vehicle to travel; and determine, based on the road information and the slope of the road section on which the vehicle is traveling, whether the vehicle travels on the slope road section.

In some embodiments, the first torque is used to resist first resistance exerted to the vehicle when the vehicle travels at a current vehicle speed, and the first resistance affects stability of the mechanical energy of the vehicle.

In some embodiments, the first resistance includes wind resistance and/or rolling resistance when the vehicle travels at the current vehicle speed.

In some embodiments, the first torque is further used to resist a part of resistance caused by the gravitational potential energy when the vehicle travels on the slope road section.

In some embodiments, the slope road section includes an uphill road section, and the processing module is further configured to: when the vehicle travels on the uphill road section, determine whether a vehicle speed of the vehicle is less than or equal to a first threshold; and the control module is further configured to: when the vehicle speed of the vehicle is less than or equal to the first threshold, control the vehicle to travel at a uniform speed based on the current vehicle speed to an end of the uphill road section.

In some embodiments, the processing module is further configured to determine the first threshold based on length information of the uphill road section, slope information of the uphill road section, and energy conversion efficiency of a drive apparatus of the vehicle.

In some embodiments, the slope road section further includes a downhill road section, and the processing module is further configured to: when the vehicle travels on the downhill road section, determine whether the vehicle speed of the vehicle is greater than or equal to a second threshold; and the control module is further configured to: when the vehicle speed of the vehicle is greater than or equal to the second threshold, control the vehicle to travel at a uniform speed based on the current vehicle speed to an end of the downhill road section.

In some embodiments, the processing module is further configured to determine the second threshold based on length information of the downhill road section, slope information of the downhill road section, and the energy conversion efficiency of the drive apparatus of the vehicle.

In some embodiments, the processing module is further configured to determine a first vehicle speed based on length information of the slope road section, slope information of the slope road section, and the energy conversion efficiency of the drive apparatus of the vehicle; and the control module is further configured to control, based on location information of the slope road section, the vehicle to travel to the slope road section based on the first vehicle speed.

In some embodiments, the information about the slope road section includes at least one of the location information, the length information, and the slope information of the slope road section.

In some embodiments, the processing module is further configured to determine, based on the road information and/or the traveling information of the vehicle, whether the vehicle completes traveling on the slope road section; and the control module is further configured to: when the vehicle completes traveling on the slope road section, control the vehicle to travel based on the current vehicle speed or a preset vehicle speed.

According to a third aspect, an embodiment of this application provides a vehicle, including a control apparatus. The control apparatus is configured to perform the method in the first aspect or the possible implementations.

In some embodiments, the vehicle further includes a sensor, and the control apparatus collects road information by using the sensor.

In some embodiments, the vehicle further includes a drive apparatus; the control apparatus sends first torque to the drive apparatus; and the drive apparatus drives the vehicle based on the first torque to travel.

According to a fourth aspect, an embodiment of this application provides a chip, including a processor, configured to invoke computer instructions from a memory and run the computer instructions, so that a device in which the chip is installed performs the method in the first aspect or the possible implementations.

According to a fifth aspect, an embodiment of this application provides an electronic device, including a processor and a memory. The memory is configured to store a computer program, and the processor is configured to invoke and run the computer program stored in the memory, to perform the method in the first aspect or the possible implementations.

According to a sixth aspect, an embodiment of this application provides a computer-readable storage medium, configured to store computer program instructions, where the computer program instructions enable a computer to perform the method in the first aspect or the possible implementations.

According to a seventh aspect, an embodiment of this application provides a computer program product, including computer program instructions, where the computer program instructions enable a computer to perform the method in the first aspect or the possible implementations.

For beneficial effects of the second aspect, the third aspect, the fourth aspect, the fifth aspect, the sixth aspect, the seventh aspect, or the possible implementations of the second aspect, the third aspect, the fourth aspect, the fifth aspect, the sixth aspect, or the seventh aspect, refer to beneficial effects brought by the first aspect and the possible implementations of the first aspect. Details are not described herein again.

### BRIEF DESCRIPTION OF DRAWINGS

FIG. 1 is a diagram of a structure of a vehicle according to an embodiment of this application;
FIG. 2 is a diagram of a structure of a vehicle according to an embodiment of this application;
FIG. 3 is a schematic flowchart of a vehicle control method according to an embodiment of this application;
FIG. 4a is a diagram of road information collection according to an embodiment of this application;
FIG. 4b is a diagram of road information collection according to an embodiment of this application;
FIG. 5A to FIG. 5D are a schematic flowchart of a vehicle control method according to an embodiment of this application;
FIG. 6 is a block diagram of a control apparatus according to an embodiment of this application; and
FIG. 7 is a block diagram of an electronic device according to an embodiment of this application.

### DESCRIPTION OF EMBODIMENTS

The following describes the technical solutions in embodiments of this application with reference to the accompanying drawings in embodiments of this application.

A vehicle in embodiments of this application may be an intelligent vehicle, for example, an autonomous driving vehicle that implements automatic control of all functions, or an assisted driving vehicle that implements automatic control of some functions to provide driving assistance, or may be a common vehicle. For ease of description, these are collectively referred to as a vehicle in the following. When the vehicle in embodiments of this application is a common vehicle, automatic control may be performed on the vehicle by using an external device of the vehicle.

In this application, vehicle control can be implemented for any type of vehicle, for example, a fuel vehicle, a new energy vehicle, or a range-extended vehicle. When the vehicle is a fuel vehicle, kinetic energy and a control logic function of the vehicle are provided for the vehicle by using fuel. When the vehicle is a new energy vehicle, kinetic energy and a control logic function of the vehicle are provided for the vehicle by using new energy, where the new energy may include electric energy, methane, and the like. When the vehicle is a range-extended vehicle, kinetic energy and a control logic function of the vehicle are provided for the vehicle by using one of fuel and electric energy, or the fuel and the electric energy. The energy that provides kinetic energy for the vehicle, or energy provided for a powertrain system of the vehicle, and the energy provided for the control logic function of the vehicle may be collectively referred to as vehicle energy supply. For ease of understanding, the following uses an example in which the kinetic energy and the control logic function of the vehicle are provided for the vehicle by using electric energy for description, which should not be construed as a limitation.

Intelligent driving utilizes artificial intelligence to assist or replace humans in vehicle operation, thereby compensating for a defect of human driving. After a large amount of research and development, great progress has been made in various sensors, computer performance, and technologies required for intelligent driving, and costs are gradually reduced. Therefore, intelligent driving has been widely used in a plurality of aspects such as automatic parking, adaptive cruise control (adaptive cruise control, ACC), autonomous emergency braking, lane departure warning, and autonomous driving.

In an intelligent driving scenario, in a driving environment without an obstacle or a curve, an intelligent driving-based control algorithm controls a vehicle to keep traveling at a uniform speed. When the vehicle travels on a fluctuating road surface (for example, a slope road section), to enable the vehicle to travel at a uniform speed, when the vehicle travels on an uphill road section, drive torque is increased to resist gravitational potential energy to prevent deceleration caused by conversion from kinetic energy to gravitational potential energy, and when the vehicle travels on a downhill road section, torque regeneration prevents acceleration caused by conversion from gravitational potential energy to kinetic energy. Therefore, energy (for example, electric energy) of the vehicle is converted into gravitational potential energy when the vehicle travels on the uphill road section, and gravitational potential energy is converted into energy (for example, electric energy) of the vehicle when the vehicle travels on the downhill road section. In such an energy conversion process, a chemical energy loss is caused due to conversion efficiency, resulting in relatively high energy consumption of the vehicle.

For the foregoing problem of relatively high energy consumption when the vehicle travels on the slope road section, in the vehicle control solution provided in this application, when the vehicle travels on the slope road section, the vehicle is driven based on first torque to travel, to maintain that a conversion amount (or referred to as a change amount of mechanical energy) between mechanical energy of the vehicle and vehicle energy supply is less than or equal to an energy threshold, so that conversion from vehicle energy supply to gravitational potential energy is avoided as far as possible during energy conversion between kinetic energy and gravitational potential energy of the vehicle, to reduce an energy conversion loss caused by the vehicle to resist or regenerate the gravitational potential energy, thereby reducing energy consumption and enhancing economical efficiency for the vehicle.

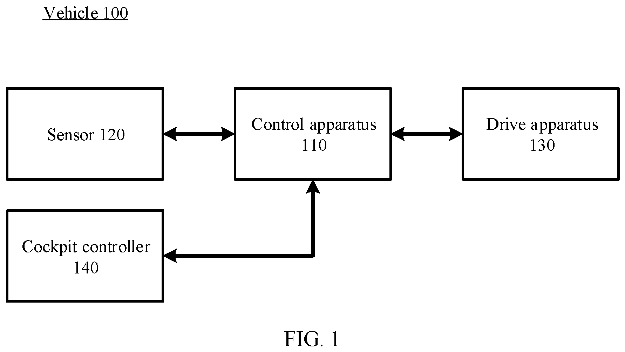

FIG. 1 is a diagram of a structure of a vehicle according to an embodiment of this application. With reference to FIG. 1, a control apparatus 110, a sensor 120, and a drive apparatus 130 are deployed in a vehicle 100.

The sensor 120 may be configured to sense a driving environment of the vehicle. The sensor 120 may include at least one of the following types of sensors: a radar (such as a lidar or a millimeter-wave radar) apparatus, an infrared apparatus, and a camera (such as a monocular camera or a binocular camera). A quantity of sensors 120 is not limited in this application. When there are a plurality of sensors 120, the plurality of sensors may be of a same type or different types. This is not limited in this application.

The control apparatus 110 may be implemented as a vehicle control unit or a component in the vehicle control unit. The control apparatus 110 may be configured to implement intelligent driving based on a control algorithm. For example, the control apparatus 110 may use the sensor 120 to sense a surrounding environment at any time in a vehicle driving process, to implement identification of a static and dynamic object and identification of a road type (for example, a slope road section, a straight road, or a curved road). The control apparatus 110 may perform analysis with reference to information about a sensed environment, to generate drive torque of the vehicle, and drive the vehicle based on the drive torque to travel.

The drive apparatus 130 may drive, based on the drive torque determined by the control apparatus 110, the vehicle to travel by using energy provided by an energy supply apparatus of the vehicle.

In some embodiments, the vehicle 100 may further include a cockpit controller 140, and the cockpit controller 140 may control a human-computer interaction apparatus in the vehicle to interact with a user. For example, the cockpit controller 140 may receive, by using the human-computer interaction apparatus, a driving mode control instruction input by the user, where the driving mode control instruction may be, for example, a control instruction for enabling an energy-saving mode. Optionally, the human-computer interaction apparatus may include at least one of a loudspeaker, a microphone, and a display screen.

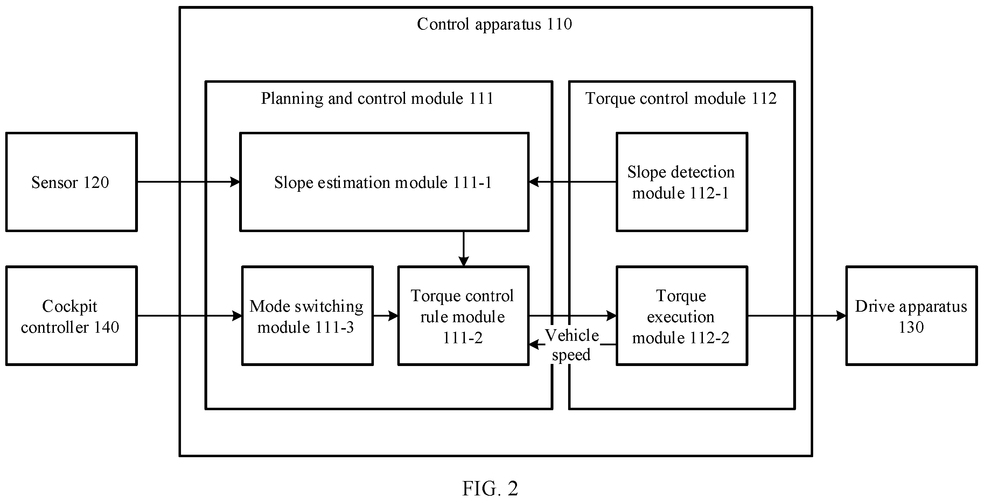

FIG. 2 is a diagram of a structure of a vehicle according to an embodiment of this application. As shown in FIG. 2, the control apparatus 110 may include a planning and control module 111 and a torque control module 112. The planning and control module 111 may determine a road environment based on information collected by using the sensor 120, for example, whether there is a slope road section in front of the vehicle. The planning and control module 111 may further obtain a slope of a road section on which the vehicle is traveling, determine whether the vehicle travels on a slope road section, or determine a traveling location on the slope road section, determine drive torque based on the information collected by the planning and control module 111 and/or current traveling information of the vehicle, and then send the drive torque to the torque control module 112. The torque control module 112 may drive the vehicle based on the drive torque sent by the planning and control module 111 to travel; and may detect a current vehicle speed, and send the vehicle speed to the planning and control module 111, so that the planning and control module 111 determines the drive torque with reference to the current vehicle speed. In some embodiments, the torque control module 112 may further determine, based on the traveling information of the vehicle, for example, current acceleration of the vehicle and current drive torque, a slope of a road section on which the vehicle is traveling, and then send the slope of the road section on which the vehicle is traveling to the planning and control module 111.

The planning and control module 111 may include a ramp estimation module 111-1 and a torque control rule module 111-2. The torque control module 112 may include a ramp detection module 112-1 and a torque execution module 112-2.

In some embodiments, the ramp estimation module 111-1 may obtain the collected information sent by the sensor 120, and determine, based on the collected information, whether the vehicle travels on a slope road section. In some other embodiments, the ramp estimation module 111-1 may further obtain the slope that is of the road section on which the vehicle is traveling and that is determined by the ramp detection module 112-1, and determine, with reference to the collected information and the slope of the road section on which the vehicle is traveling, whether the vehicle travels on a slope road section. The ramp estimation module 111-1 may send an estimation result to the torque control rule module 111-2. The torque planning module 111-2 determines the drive torque based on the ramp estimation result and the vehicle speed.

In some embodiments, the planning and control module further includes a mode switching module 111-3. The mode switching module 111-3 enables a corresponding driving mode in response to a mode control instruction sent by the cockpit controller 140, so that the torque control rule module 111-2 determines the drive torque with reference to the driving mode.

The torque control rule module 111-2 sends the drive torque to the torque execution module 112-2, so that the torque execution module 112-2 controls the drive apparatus 130 to perform drive control on the vehicle.

It should be understood that division into units/modules of the foregoing apparatus is merely logical function division. During actual implementation, all or some of the units/modules may be integrated into one physical entity, or may be physically separated.

The following describes in detail a vehicle control method provided in embodiments of this application with reference to the accompanying drawings.

For ease of understanding and description, the following describes the method provided in embodiments of this application by using a control apparatus as an execution body. The control apparatus may be, for example, the control apparatus 110 in FIG. 1 and FIG. 2. The execution body of the method is not limited in this application. Any device that can perform, by using a program that can run code of the method provided in embodiments of this application, the method provided in embodiments of this application may be used as the execution body of the method provided in embodiments of this application. For example, the control apparatus may be implemented as a vehicle or a vehicle control unit in the vehicle, or may be implemented as a chip or a chip system in the vehicle, or may be implemented as another functional module that can invoke a program and execute the program.

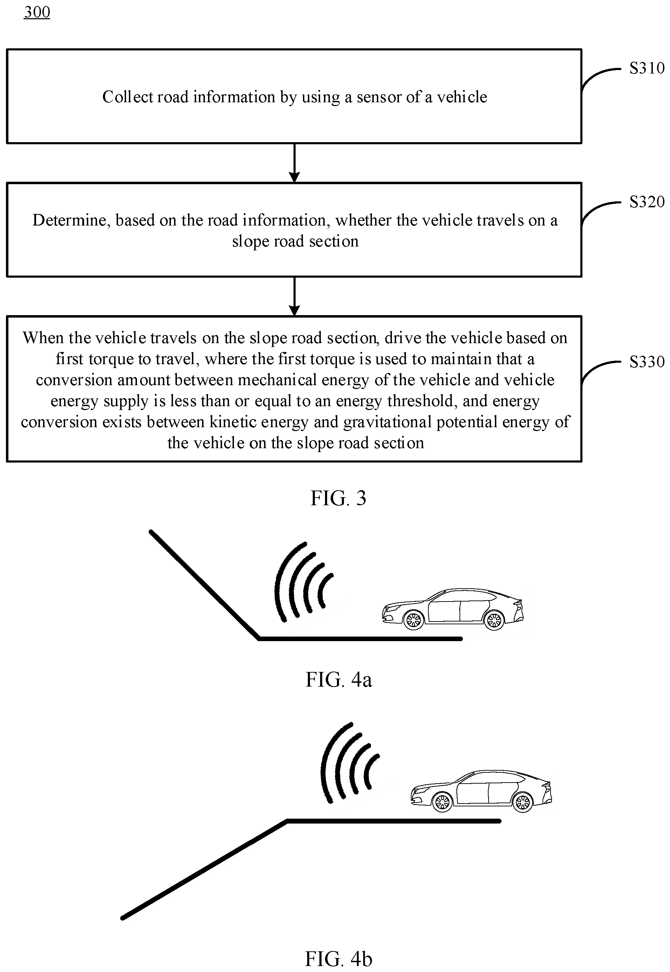

FIG. 3 is a schematic flowchart of a vehicle control method 300 according to an embodiment of this application. As shown in FIG. 3, the method 300 may include some or all of the following processes.

S310: Collect road information by using a sensor of a vehicle.

S320: Determine, based on the road information, whether the vehicle travels on a slope road section.

S330: When the vehicle travels on the slope road section, drive the vehicle based on first torque to travel, where the first torque is used to maintain that a conversion amount between mechanical energy of the vehicle and vehicle energy supply is less than or equal to an energy threshold, and energy conversion exists between kinetic energy and gravitational potential energy of the vehicle on the slope road section.

The road information may include information about a slope road section in a to-be-traveled road section. The slope road section may include at least one of an uphill road section and a downhill road section. The information about the slope road section may include at least one of slope information, length information, and location information of the slope road section. The location information of the slope road section may be a distance between the slope road section and a current vehicle location, a location of the vehicle on the slope road section, or the like. It should be noted that the slope road section is also referred to as a ramp or an inclined road. Generally, the slope road section should be a section of a road whose inclination degree is greater than an angle threshold and whose inclination degree is kept for a distance threshold. An angle threshold and a distance threshold for determining whether a road is a slope road section are not limited.

With reference to FIG. 4a and FIG. 4b, the sensor of the vehicle may collect a surrounding road in real time in a driving process of the vehicle, to obtain the road information. The vehicle may determine, based on the collected road information, whether the vehicle travels on the slope road section. Compared with a manner of determining, by the vehicle based on map data, whether the vehicle travels on the slope road section, in this manner of determining, based on road pre-targeting, whether the vehicle travels on the slope road section, a problem that online map data cannot be obtained in a timely manner when a network is unstable, and vehicle control accuracy is reduced can be avoided, and a problem that network load overheads caused by downloading the map data affect communication quality of the vehicle can be avoided.

Regardless of the uphill road section (refer to FIG. 4a) or the downhill road section (refer to FIG. 4b), information about the slope road section may be collected by using the sensor of the vehicle. As shown in FIG. 4a, the sensor may collect at least one of length information of the uphill road section, slope information of the uphill road section, a distance between the uphill road section and the current vehicle location, or a location of the vehicle on the uphill road section. As shown in FIG. 4b, the sensor may collect at least one of length information of the downhill road section, slope information of the downhill road section, a distance between the downhill road section and the current vehicle location, or a location of the vehicle on the downhill road section.

When the vehicle does not travel to the slope road section, the control apparatus may control the vehicle based on any control algorithm to travel, for example, control the vehicle to travel at a uniform speed on a road section without an obstacle or a curve. When the vehicle travels to the slope road section, to reduce an energy loss of the vehicle, in this embodiment of this application, it is considered that drive torque (for example, referred to as first torque) can be determined to enable lossless conversion between kinetic energy and gravitational potential energy of the vehicle as far as possible, that is, maintain stable mechanical energy of the vehicle. Therefore, when the vehicle travels on the slope road section, the control apparatus may drive the vehicle based on the first torque to travel. The first torque is used to maintain that the conversion amount between the mechanical energy of the vehicle and the vehicle energy supply is less than or equal to the energy threshold. It should be understood that a smaller conversion amount between the mechanical energy and the vehicle energy supply indicates more stable mechanical energy of the vehicle, and less energy used by the vehicle to resist a change in mechanical energy, that is, less energy consumption of the vehicle.

In an ideal case, the control apparatus may maintain stable mechanical energy of the vehicle by using the first torque. However, an error inevitably exists. Therefore, in an understanding, the energy threshold may reflect an error range allowed when the mechanical energy is maintained stable. In this case, the first torque may be used to resist first resistance exerted to the vehicle when the vehicle travels at a current vehicle speed, and the first resistance affects stability of the mechanical energy of the vehicle. Optionally, the first resistance includes wind resistance and/or rolling resistance when the vehicle travels at the current vehicle speed.

In another understanding, in addition to the first resistance, the first torque is further used to resist a part of resistance caused by gravitational potential energy when the vehicle travels on the slope road section. It should be noted that the part of resistance generated by the gravitational potential energy and resisted by the first torque is less than resistance generated by the gravitational potential energy when the vehicle is controlled to travel at a uniform speed on the slope road section. In other words, in a process in which the control apparatus controls the vehicle based on the first torque to travel, energy conversion still exists between the kinetic energy and the gravitational potential energy of the vehicle.

In some embodiments, to improve vehicle control accuracy, the control apparatus may determine, based on the road information collected by the sensor and traveling information of the vehicle, whether the vehicle travels on the slope road section. The traveling information may include current acceleration of the vehicle and current torque for driving the vehicle to travel. Optionally, the control apparatus may obtain acceleration of the vehicle in real time by using an acceleration sensor.

The control apparatus may determine, based on the current acceleration of the vehicle and the current torque for driving the vehicle to travel, a slope of a road section on which the vehicle is traveling. Further, the control apparatus may determine, based on the road information collected by the sensor and the slope of the road section on which the vehicle is traveling, whether the vehicle travels on the slope road section.

It should be understood that the control apparatus may further determine, based on the traveling information of the vehicle, whether the vehicle travels on the slope road section. For example, the control apparatus determines, based on the current acceleration of the vehicle and the current torque for driving the vehicle to travel, a slope of a road section on which the vehicle is traveling, and then determines, based on the slope of the road section on which the vehicle is traveling, whether the vehicle travels on the slope road section.

When the vehicle does not travel on the slope road section, the control apparatus may determine a distance between a current traveling location of the vehicle and the slope road section based on the road information and/or the slope of the road section on which the vehicle is traveling. When the vehicle travels on the slope road section, the control apparatus may determine a current location of the vehicle on the slope road section based on a road and/or the slope of the road section on which the vehicle is traveling.

In some embodiments, to avoid that a vehicle speed of the vehicle on the slope road section is excessively small, which affects traveling efficiency, or the vehicle speed of the vehicle is excessively large, which affects traveling safety, the control apparatus needs to restrict the vehicle speed of the vehicle based on a vehicle speed threshold, for example, control, by adjusting drive torque, the vehicle speed to keep within a range restricted by the vehicle speed threshold. The vehicle speed threshold may include a first threshold that restricts a lower vehicle speed limit and/or a second threshold that restricts an upper vehicle speed limit.

For example, when the vehicle travels on an uphill road section, the control apparatus determines whether the vehicle speed of the vehicle is less than or equal to the first threshold. If the vehicle speed of the vehicle is less than or equal to the first threshold, the control apparatus may control the vehicle to travel at a uniform speed based on the current vehicle speed to an end of the uphill road section, to avoid impact of an excessively low vehicle speed on traveling efficiency. If the vehicle speed of the vehicle is greater than the first threshold, the control apparatus may continue to drive the vehicle based on the determined first torque to travel, to reduce energy consumption of the vehicle.

It should be noted that the control apparatus may obtain the vehicle speed of the vehicle in real time, for example, periodically obtain the vehicle speed of the vehicle at a specific time interval. When the vehicle speed of the vehicle gradually decreases to the first threshold on the uphill road section, the control apparatus controls the vehicle to travel at a uniform speed to an end of the uphill road section. However, in consideration that there may be a delay in obtaining the vehicle speed by the control apparatus, consequently, the obtained vehicle speed has decreased to below the first threshold. Therefore, when the vehicle speed is less than the first threshold, the control apparatus also controls the vehicle to travel at a uniform speed to the end of the uphill road section.

In another possible implementation of the foregoing example, when the vehicle speed of the vehicle is less than or equal to the first threshold, the control apparatus may further control the vehicle to travel at a uniform speed based on the first threshold to the end of the uphill road section.

For example, when the vehicle travels on a downhill road section, the control apparatus determines whether the vehicle speed of the vehicle is greater than or equal to the second threshold. If the vehicle speed of the vehicle is greater than or equal to the second threshold, the control apparatus may control the vehicle to travel at a uniform speed based on the current vehicle speed to the end of the downhill road section, to avoid a danger caused by an excessively high vehicle speed to driving safety. If the vehicle speed of the vehicle is less than the second threshold, the control apparatus may continue to drive the vehicle based on the determined first torque to travel, to reduce energy consumption of the vehicle.

It should be noted that the control apparatus may obtain the vehicle speed of the vehicle in real time, for example, periodically obtain the vehicle speed of the vehicle at a specific time interval. When the vehicle speed of the vehicle gradually increases to the second threshold on the downhill road section, the control apparatus controls the vehicle to travel at a uniform speed to the end of the downhill road section. However, in consideration that there may be a delay in obtaining the vehicle speed by the control apparatus, consequently, the obtained vehicle speed has increased to above the second threshold. Therefore, when the vehicle speed is greater than the second threshold, the control apparatus also controls the vehicle to travel at a uniform speed to the end of the downhill road section.

In another possible implementation of the foregoing example, when the vehicle speed of the vehicle is greater than or equal to the second threshold, the control apparatus may further control the vehicle to travel at a uniform speed based on the second threshold to the end of the downhill road section.

The vehicle speed threshold (for example, the first threshold and/or the second threshold) may be preset, or may be determined by the control apparatus. For example, the control apparatus may determine the first threshold based on length information of the uphill road section, slope information of the uphill road section, and energy conversion efficiency of a drive apparatus of the vehicle. For example, the control apparatus may determine the second threshold based on length information of the downhill road section, slope information of the downhill road section, and the energy conversion efficiency of the drive apparatus of the vehicle.

In some embodiments, to ensure that the control apparatus can control, based on the first torque, the vehicle to travel at a safe and efficient vehicle speed on the slope road section, the control apparatus may determine an initial speed at which the vehicle travels on the slope road section, which is referred to as a first vehicle speed below, based on the information about the slope road section, for example, length information of the slope road section and/or slope information of the slope road section, and the vehicle may start to travel on the slope road section based on the first vehicle speed.

For example, the control apparatus may determine the first vehicle speed based on length information of the slope road section, slope information of the slope road section, and the energy conversion efficiency of the drive apparatus of the vehicle. Then, the control apparatus controls, based on location information of the slope road section, the vehicle to travel to the slope road section based on the first vehicle speed. Specifically, on the uphill road section, the control apparatus may determine the first vehicle speed based on the length information and the slope information of the uphill road section and the energy conversion efficiency of the drive apparatus of the vehicle; on the downhill road section, the control apparatus may determine the first vehicle based on the length information and the slope information of the downhill road section and the energy conversion efficiency of the drive apparatus of the vehicle; and on continuous uphill and downhill road sections (for example, uphill and then downhill, or downhill and then uphill), the control apparatus may determine the first vehicle speed based on length information and slope information of the entire slope road section (including the uphill road section and the downhill road section), and the energy conversion efficiency of the drive apparatus of the vehicle.

The control apparatus controlling the vehicle to travel based on the first vehicle speed may include: when the current vehicle speed of the vehicle is less than the first vehicle speed, controlling the vehicle to accelerate to the first vehicle speed; or when the current vehicle speed of the vehicle is greater than the first vehicle speed, controlling the vehicle to decelerate to the first vehicle speed. Optionally, if the current vehicle speed of the vehicle is greater than or equal to the first vehicle speed, the control apparatus may control the vehicle to travel based on the current vehicle speed.

In continuous uphill and downhill road sections, information about some slope road sections may not be collected. For example, when the vehicle travels uphill, information about the downhill road section cannot be collected. In some embodiments, the sensor of the vehicle may start to collect information about the downhill road section when the vehicle reaches or is about to reach a top of slope. In this case, the control apparatus may first determine the first vehicle speed corresponding to the uphill road section, and then determine the first vehicle speed corresponding to the downhill road section. In some other embodiments, the control apparatus may determine, with reference to map data, for example, navigation information of the vehicle, information about the downhill road section that cannot be collected, and determine the first vehicle speed of the vehicle by combining the information about the uphill road section and the information about the downhill road section.

The foregoing process of determining the first vehicle speed is also applicable to determining the foregoing vehicle speed threshold. It should be further understood that the vehicle speed threshold and the first vehicle speed may be simultaneously generated. For example, the control apparatus determines a preferred vehicle speed and a preferred vehicle speed range based on the length information of the slope road section, the slope information of the slope road section, and the energy conversion efficiency of the drive apparatus of the vehicle. The preferred vehicle speed is the first vehicle speed, an upper limit of the vehicle speed range is the second threshold, and a lower limit of the vehicle speed range is the first threshold.

In some embodiments, the control apparatus may determine, based on the road information and/or the traveling information of the vehicle, whether the vehicle completes traveling on the slope road section. When the vehicle completes traveling on the slope road section, the control apparatus may determine drive torque of the vehicle based on any intelligent driving control algorithm. For example, the control apparatus may drive the vehicle to travel based on a control algorithm before traveling on the slope road section. In an example, the control apparatus may control the vehicle to travel at a uniform speed based on the current vehicle speed or a preset vehicle speed.

Therefore, in this embodiment of this application, when the vehicle travels on the slope road section, the control apparatus drives the vehicle based on the first torque to travel, where the first torque is used to maintain that a conversion amount between mechanical energy of the vehicle and vehicle energy supply is less than or equal to an energy threshold, so as to achieve a goal of controlling energy conversion between kinetic energy and gravitational potential energy of the vehicle on the slope road section, to reduce energy provided by the vehicle to resist or regenerate a change of the gravitational potential energy, thereby reducing energy consumption and enhancing economical efficiency for the vehicle.

Further, the control apparatus determines, based on the road information collected by the sensor of the vehicle, whether the vehicle travels on the slope road section without relying on map data. A problem that online map data cannot be obtained in a timely manner when a network is unstable, and vehicle control accuracy is reduced can be avoided, and a problem that network load overheads caused by downloading the map data affect communication quality of the vehicle can be avoided.

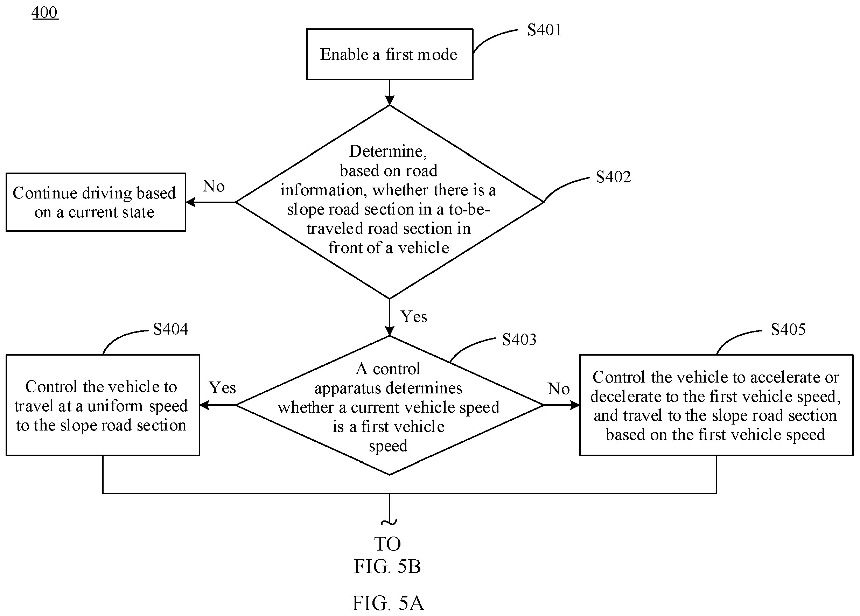

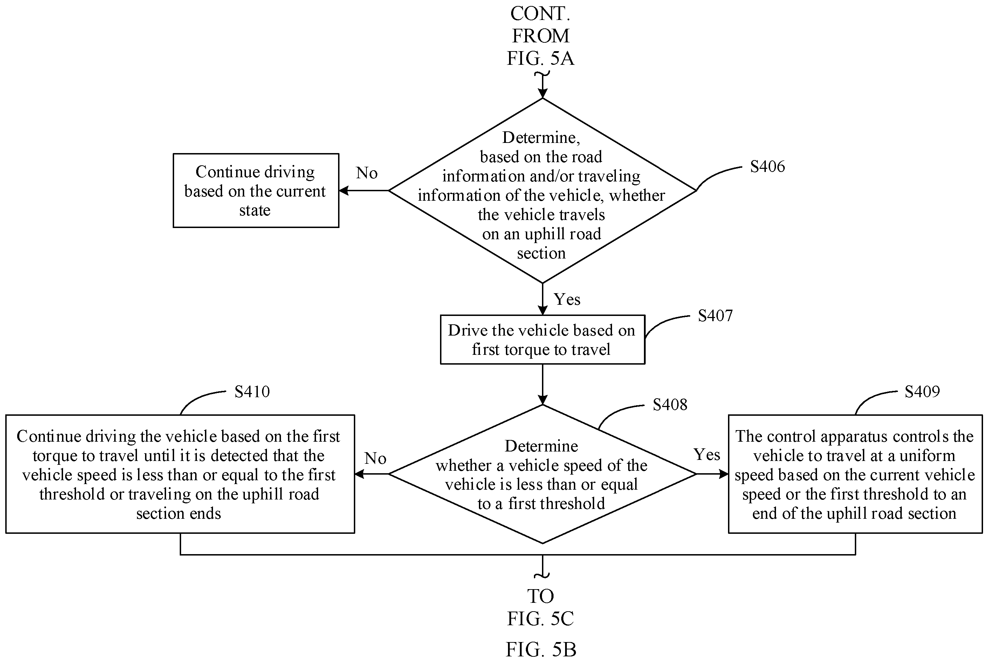

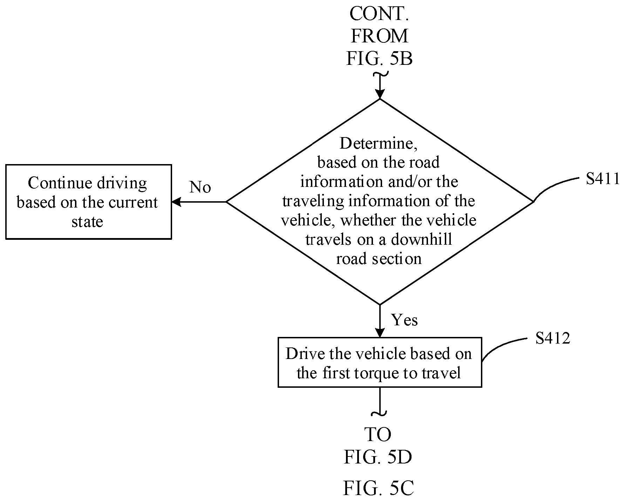

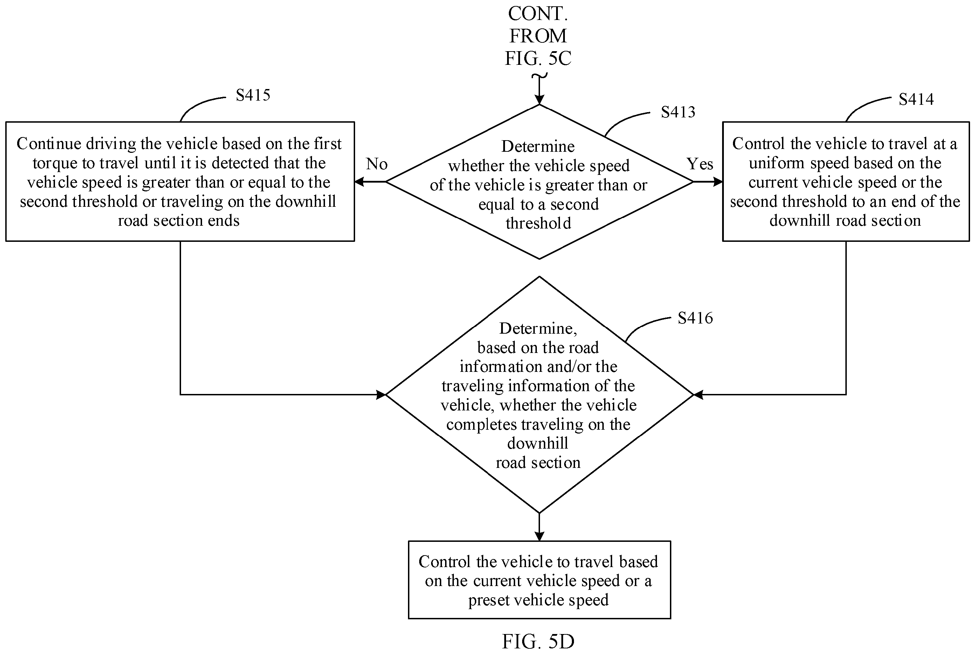

With reference to FIG. 5A to FIG. 5D, the following describes a vehicle control method by using an example in which a vehicle travels on continuous uphill and downhill road sections.

FIG. 5A to FIG. 5D are a schematic flowchart of a vehicle control method according to an embodiment of this application. Refer to FIG. 5A to FIG. 5D. A method 400 may include at least some of the following steps:

S401: Enable a first mode in response to a mode control instruction. A control apparatus may drive, in the first mode based on first torque, a vehicle to travel on a slope road section.

The mode control instruction may be input in response to a user operation. For example, a cockpit controller generates a mode control instruction in response to a selection operation performed by a user on control of the first mode on a human-computer interaction interface, and sends the mode control instruction to the control apparatus. Alternatively, the mode control instruction may be generated by the control apparatus based on remaining energy/remaining mileage of the vehicle. For example, when the remaining energy of the vehicle is less than an energy threshold, a mode control instruction is generated to enable the first mode.

It may be understood that, in the first mode, drive torque of the vehicle when the vehicle does not travel on the slope road section is not limited in this application.

It is not limited in this application that after the first mode is enabled, the control apparatus drives the vehicle based on the first torque to travel on the slope road section. For example, that the control apparatus drives based on the first torque the vehicle to travel on the slope road section may be set by default.

S402: The control apparatus determines, based on road information, whether there is a slope road section in a to-be-traveled road section in front of the vehicle.

If the control apparatus determines that there is a slope road section in the to-be-traveled road section in front of the vehicle, S403 is performed. If the control apparatus determines that there is no slope road section in the to-be-traveled road section in front of the vehicle, the control apparatus continues to travel based on a current state, or continues to control the vehicle based on a current control algorithm to travel.

S403: The control apparatus determines whether a current vehicle speed is a first vehicle speed.

If the control apparatus determines that the current vehicle speed is the first vehicle speed, S404 is performed; or if the control apparatus determines that the current vehicle speed is not the first vehicle speed, S405 is performed.

S404: The control apparatus controls the vehicle to travel at a uniform speed to the slope road section.

S405: If the current vehicle speed is less than the first vehicle speed, the control apparatus controls the vehicle to accelerate to the first vehicle speed; or if the current vehicle speed is greater than the first vehicle speed, the control apparatus controls the vehicle to decelerate to the first vehicle speed and travel to the slope road section based on the first vehicle speed.

In some embodiments, when the current vehicle speed is greater than the first vehicle speed, the control apparatus may control the vehicle to travel at a uniform speed to the slope road section.

S406: The control apparatus determines, based on the road information and/or traveling information of the vehicle, whether the vehicle travels on an uphill road section.

If the control apparatus determines that the vehicle travels on the uphill road section, for example, starts to travel uphill, S407 is performed. If the control apparatus determines that the vehicle does not travel on the uphill road section, for example, does not travel to the uphill road section, the vehicle continues to travel based on the current state.

S407: The control apparatus drives the vehicle based on the first torque to travel.

S408: The control apparatus determines whether a vehicle speed of the vehicle is less than or equal to a first threshold.

If the control apparatus determines that the vehicle speed of the vehicle is less than or equal to the first threshold, S409 is performed; or if the control apparatus determines that the vehicle speed of the vehicle is greater than the first threshold, S410 is performed.

S409: The control apparatus controls the vehicle to travel at a uniform speed based on the current vehicle speed or the first threshold to an end of the uphill road section.

S410: The control apparatus continues driving the vehicle based on the first torque to travel until it is detected that the vehicle speed is less than or equal to the first threshold or traveling on the uphill road section ends.

S411: The control apparatus determines, based on the road information and/or the traveling information of the vehicle, whether the vehicle travels on a downhill road section.

If the control apparatus determines that the vehicle travels on the downhill road section, for example, starts to travel downhill, S412 is performed. If the control apparatus determines that the vehicle does not travel on the downhill road section, for example, does not travel to the downhill road section, the vehicle continues to travel based on the current state.

S412: The control apparatus drives the vehicle based on the first torque to travel.

S413: The control apparatus determines whether the vehicle speed of the vehicle is greater than or equal to a second threshold.

If the control apparatus determines that the vehicle speed of the vehicle is greater than or equal to the second threshold, S414 is performed; or if the control apparatus determines that the vehicle speed of the vehicle is less than the second threshold, S415 is performed.

S414: The control apparatus controls the vehicle to travel at a uniform speed based on the current vehicle speed or the second threshold to an end of the downhill road section.

S415: The control apparatus continues driving the vehicle based on the first torque to travel until it is detected that the vehicle speed is greater than or equal to the second threshold or traveling on the downhill road section ends.

S416: The control apparatus determines, based on the road information and/or the traveling information of the vehicle, whether the vehicle completes traveling on the downhill road section.

If the control apparatus determines that the vehicle completes traveling on the downhill road section, the control apparatus controls the vehicle to travel based on the current vehicle speed or a preset vehicle speed.

The embodiment shown in FIG. 5A to FIG. 5D may be combined with any one of the foregoing embodiments. Some steps in the embodiment shown in FIG. 5A to FIG. 5D are the same as or similar to those in the foregoing embodiments. For steps or implementations that are not described in detail, refer to the foregoing embodiments.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

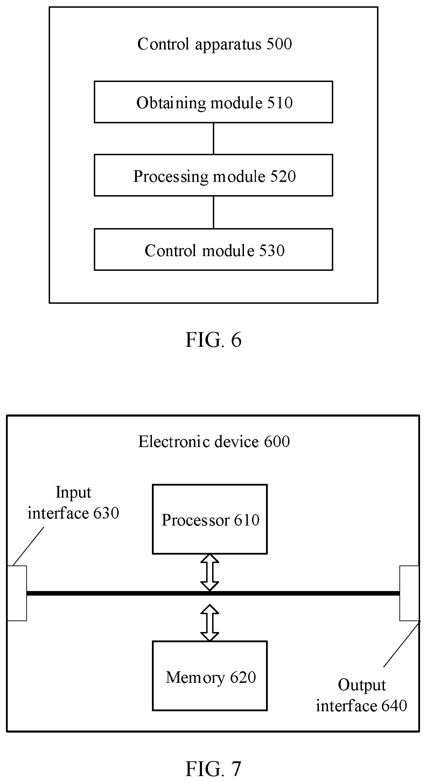

FIG. 6 is a block diagram of a control apparatus according to an embodiment of this application. As shown in FIG. 6, the apparatus 500 may include an obtaining module 510, a processing module 520, and a control module 530.

The obtaining module 510 may be configured to collect road information by using a sensor of a vehicle, where the road information includes information about a slope road section in a to-be-traveled road section. The processing module 520 may be configured to determine, based on the road information, whether the vehicle travels on the slope road section. The control module 530 may be configured to: when the vehicle travels on the slope road section, drive the vehicle based on first torque to travel, where the first torque is used to maintain that a conversion amount between mechanical energy of the vehicle and vehicle energy supply is less than or equal to an energy threshold, and energy conversion exists between kinetic energy and gravitational potential energy of the vehicle on the slope road section.

In some embodiments, the processing module 520 is further configured to: determine, based on traveling information of the vehicle, a slope of a road section on which the vehicle is traveling, where the traveling information includes current acceleration of the vehicle and current torque for driving the vehicle to travel; and determine, based on the road information and the slope of the road section on which the vehicle is traveling, whether the vehicle travels on the slope road section.

In some embodiments, the first torque is used to resist first resistance exerted to the vehicle when the vehicle travels at a current vehicle speed, and the first resistance affects stability of the mechanical energy of the vehicle.

In some embodiments, the first resistance includes wind resistance and/or rolling resistance when the vehicle travels at the current vehicle speed.

In some embodiments, the first torque is further used to resist a part of resistance caused by the gravitational potential energy when the vehicle travels on the slope road section.

In some embodiments, the slope road section includes an uphill road section, and the processing module 520 is further configured to: when the vehicle travels on the uphill road section, determine whether a vehicle speed of the vehicle is less than or equal to a first threshold; and the control module 530 is further configured to: when the vehicle speed of the vehicle is less than or equal to the first threshold, control the vehicle to travel at a uniform speed based on the current vehicle speed to an end of the uphill road section.

In some embodiments, the processing module 520 is further configured to determine the first threshold based on length information of the uphill road section, slope information of the uphill road section, and energy conversion efficiency of a drive apparatus of the vehicle.

In some embodiments, the slope road section further includes a downhill road section, and the processing module 520 is further configured to: when the vehicle travels on the downhill road section, determine whether the vehicle speed of the vehicle is greater than or equal to a second threshold; and the control module 530 is further configured to: when the vehicle speed of the vehicle is greater than or equal to the second threshold, control the vehicle to travel at a uniform speed based on the current vehicle speed to an end of the downhill road section.

In some embodiments, the processing module 520 is further configured to determine the second threshold based on length information of the downhill road section, slope information of the downhill road section, and the energy conversion efficiency of the drive apparatus of the vehicle.

In some embodiments, the processing module 520 is further configured to determine a first vehicle speed based on length information of the slope road section, slope information of the slope road section, and the energy conversion efficiency of the drive apparatus of the vehicle; and the control module 530 is further configured to control, based on location information of the slope road section, the vehicle to travel to the slope road section based on the first vehicle speed.

In some embodiments, the information about the slope road section includes at least one of the location information, the length information, and the slope information of the slope road section.

In some embodiments, the processing module 520 is further configured to determine, based on the road information and/or the traveling information of the vehicle, whether the vehicle completes traveling on the slope road section; and the control module 530 is further configured to: when the vehicle completes traveling on the slope road section, control the vehicle to travel based on the current vehicle speed or a preset vehicle speed.

It should be understood that specific processes in which the modules perform the foregoing corresponding steps are described in detail in the foregoing method embodiments. For brevity, details are not described herein again.

Division into units/modules of the foregoing apparatus is merely logical function division. During actual implementation, all or some of the units/modules may be integrated into a physical entity, or may be physically separated.

FIG. 7 is a block diagram of an electronic device 600 according to an embodiment of this application. The electronic device 600 may be implemented as a server or a terminal device, or the electronic device 600 may be replaced with a component in the electronic device, for example, a chip or a chip system. The electronic device 600 may include a processor 610 and a memory 620. The processor 610 and the memory 620 communicate with each other through an internal connection path. The memory 620 is configured to store instructions. The processor 610 is configured to execute the instructions stored in the memory 620.

Optionally, the memory 620 may include a read-only memory and a random access memory, and provide the instructions and data for the processor 610. The memory 620 may be an independent component, or may be integrated into the processor 610.

In some embodiments, the electronic device 600 may further include an input interface 630. The processor 610 may control the input interface 630 to communicate with another device or chip, and specifically, may obtain information or data sent by the another device or chip.

In some embodiments, the electronic device 600 may further include an output interface 640. The processor 610 may control the output interface 640 to communicate with the another device or chip, and specifically, may output information or data to the another device or chip.

In some embodiments, the electronic device 600 may implement corresponding procedures of the methods in embodiments of this application. For brevity, details are not described herein again.

It should be understood that the processor in this embodiment of this application may be an integrated circuit chip, and has a signal processing capability. In an implementation process, steps in the foregoing method embodiments can be implemented by using a hardware integrated logic circuit in the processor, or by using instructions in a form of software. The processor may be a general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

An embodiment of this application further provides a computer-readable storage medium, configured to store a computer program. In some embodiments, the computer program enables a computer to perform corresponding procedures in the methods in embodiments of this application. For brevity, details are not described herein again.

An embodiment of this application further provides a computer program product, including computer program instructions. In some embodiments, the computer program instructions enable a computer to perform corresponding procedures in the methods in embodiments of this application. For brevity, details are not described herein again.

An embodiment of this application further provides a computer program. In some embodiments, when the computer program is run on a computer, the computer is enabled to perform corresponding procedures in the methods in embodiments of this application. For brevity, details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A vehicle control method, comprising:
collecting road information by using a sensor of a vehicle, wherein the road information comprises information about a slope road section in a to-be-traveled road section;
determining, based on the road information, whether the vehicle travels on the slope road section; and
when the vehicle travels on the slope road section, driving the vehicle based on first torque to travel, wherein the first torque is used to maintain that a conversion amount between mechanical energy of the vehicle and vehicle energy supply is less than or equal to an energy threshold, energy conversion exists between kinetic energy and gravitational potential energy of the vehicle on the slope road section, and the vehicle energy supply is energy provided by a powertrain system of the vehicle.

2. The method according to claim 1, wherein the method further comprises:
determining, based on traveling information of the vehicle, a slope of a road section on which the vehicle is traveling, wherein the traveling information comprises current acceleration of the vehicle and current torque for driving the vehicle to travel; and
determining, based on the road information, whether the vehicle travels on the slope road section comprises:
determining, based on the road information and the slope of the road section on which the vehicle is traveling, whether the vehicle travels on the slope road section.

3. The method according to claim 1 or 2, wherein the first torque is used to resist first resistance exerted to the vehicle when the vehicle travels at a current vehicle speed, and the first resistance affects stability of the mechanical energy of the vehicle.

4. The method according to claim 3, wherein the first resistance comprises wind resistance and/or rolling resistance when the vehicle travels at the current vehicle speed.

5. The method according to claim 3 or 4, wherein the first torque is further used to resist a part of resistance caused by the gravitational potential energy when the vehicle travels on the slope road section.

6. The method according to any one of claims 1 to 5, wherein the slope road section comprises an uphill road section, and the method further comprises:
when the vehicle travels on the uphill road section, determining whether a vehicle speed of the vehicle is less than or equal to a first threshold; and
when the vehicle speed of the vehicle is less than or equal to the first threshold, controlling the vehicle to travel at a uniform speed based on the current vehicle speed to an end of the uphill

7. The method according to claim 6, further comprising:
determining the first threshold based on length information of the uphill road section, slope information of the uphill road section, and energy conversion efficiency of a drive apparatus of the vehicle.

8. The method according to any one of claims 1 to 7, wherein the slope road section further comprises a downhill road section, and the method further comprises:
when the vehicle travels on the downhill road section, determining whether the vehicle speed of the vehicle is greater than or equal to a second threshold; and
when the vehicle speed of the vehicle is greater than or equal to the second threshold, controlling the vehicle to travel at a uniform speed based on the current vehicle speed to an end of the downhill road section.

9. The method according to claim 8, further comprising:
determining the second threshold based on length information of the downhill road section, slope information of the downhill road section, and the energy conversion efficiency of the drive apparatus of the vehicle.

10. The method according to any one of claims 1 to 9, further comprising:
determining a first vehicle speed based on length information of the slope road section, slope information of the slope road section, and the energy conversion efficiency of the drive apparatus of the vehicle; and
controlling, based on location information of the slope road section, the vehicle to travel to the slope road section based on the first vehicle speed.

11. The method according to any one of claims 1 to 10, wherein the information about the slope road section comprises at least one of the location information, the length information, and the slope information of the slope road section.

12. The method according to any one of claims 1 to 11, further comprising:
determining, based on the road information and/or the traveling information of the vehicle, whether the vehicle completes traveling on the slope road section; and
when the vehicle completes traveling on the slope road section, controlling the vehicle to travel based on the current vehicle speed or a preset vehicle speed.

13. A control apparatus, comprising:
an obtaining module, configured to collect road information by using a sensor of a vehicle, wherein the road information comprises information about a slope road section in a to-be-traveled road section;
a processing module, configured to determine, based on the road information, whether the vehicle travels on the slope road section; and
a control module, configured to: when the vehicle travels on the slope road section, drive the vehicle based on first torque to travel, wherein the first torque is used to maintain that a conversion amount between mechanical energy of the vehicle and vehicle energy supply is less than or equal to an energy threshold, energy conversion exists between kinetic energy and gravitational potential energy of the vehicle on the slope road section, and the vehicle energy supply is energy provided by a powertrain system of the vehicle.

14. The apparatus according to claim 13, wherein the processing module is further configured to:
determine, based on traveling information of the vehicle, a slope of a road section on which the vehicle is traveling, wherein the traveling information comprises current acceleration of the vehicle and current torque for driving the vehicle to travel; and
determine, based on the road information and the slope of the road section on which the vehicle is traveling, whether the vehicle travels on the slope road section.

15. The apparatus according to claim 13 or 14, wherein the first torque is used to resist first resistance exerted to the vehicle when the vehicle travels at a current vehicle speed, and the first resistance affects stability of the mechanical energy of the vehicle.

16. The apparatus according to claim 15, wherein the first resistance comprises wind resistance and/or rolling resistance when the vehicle travels at the current vehicle speed.

17. The apparatus according to claim 15 or 16, wherein the first torque is further used to resist a part of resistance caused by the gravitational potential energy when the vehicle travels on the slope road section.

18. The apparatus according to any one of claims 13 to 17, wherein the slope road section comprises an uphill road section;
the processing module is further configured to: when the vehicle travels on the uphill road section, determine whether a vehicle speed of the vehicle is less than or equal to a first threshold; and
the control module is further configured to: when the vehicle speed of the vehicle is less than or equal to the first threshold, control the vehicle to travel at a uniform speed based on the current vehicle speed to an end of the uphill road section.

19. The apparatus according to claim 18, wherein the processing module is further configured to:
determine the first threshold based on length information of the uphill road section, slope information of the uphill road section, and energy conversion efficiency of a drive apparatus of the vehicle.

20. The apparatus according to any one of claims 13 to 19, wherein the slope road section further comprises a downhill road section;
the processing module is further configured to: when the vehicle travels on the downhill road section, determine whether the vehicle speed of the vehicle is greater than or equal to a second threshold; and
the control module is further configured to: when the vehicle speed of the vehicle is greater than or equal to the second threshold, control the vehicle to travel at a uniform speed based on the current vehicle speed to an end of the downhill road section.

21. The apparatus according to claim 20, wherein the processing module is further configured to:
determine the second threshold based on length information of the downhill road section, slope information of the downhill road section, and the energy conversion efficiency of the drive apparatus of the vehicle.

22. The apparatus according to any one of claims 13 to 21, wherein
the processing module is further configured to determine a first vehicle speed based on length information of the slope road section, slope information of the slope road section, and the energy conversion efficiency of the drive apparatus of the vehicle; and
the control module is further configured to control, based on location information of the slope road section, the vehicle to travel to the slope road section based on the first vehicle speed.

23. The apparatus according to any one of claims 13 to 22, wherein the information about the slope road section comprises at least one of the location information, the length information, and the slope information of the slope road section.

24. The apparatus according to any one of claims 13 to 23, wherein
the processing module is further configured to determine, based on the road information and/or the traveling information of the vehicle, whether the vehicle completes traveling on the slope road section; and
the control module is further configured to: when the vehicle completes traveling on the slope road section, control the vehicle to travel based on the current vehicle speed or a preset vehicle speed.

25. A vehicle, comprising a control apparatus, wherein the control apparatus is configured to perform the method according to any one of claims 1 to 12.

26. The vehicle according to claim 25, further comprising a sensor, wherein
the control apparatus collects the road information by using the sensor.

27. The vehicle according to claim 25 or 26, further comprising a drive apparatus, wherein
the control apparatus sends the first torque to the drive apparatus; and
the drive apparatus drives the vehicle based on the first torque to travel.

28. A chip, comprising a processor, configured to invoke computer instructions from a memory and run the computer instructions, to enable a device in which the chip is installed to perform the method according to any one of claims 1 to 12.

29. An electronic device, comprising a processor and a memory, wherein the memory is configured to store a computer program, and the processor is configured to invoke and run the computer program stored in the memory, to perform the method according to any one of claims 1 to 12.

30. A computer-readable storage medium, configured to store computer program instructions, wherein the computer program enables a computer to perform the method according to any one of claims 1 to 12.

31. A computer program product, comprising computer program instructions, wherein the computer program instructions enable a computer to perform the method according to any one of claims 1 to 12.
